# EUROPÄISCHE PATENTSCHRIFT

(11) **EP 3 112 734 B1**
(45) Veröffentlichungstag und Bekanntmachung des Hinweises auf die Patenterteilung: **26.12.2018**
(21) Anmeldenummer: 16177253.8
(22) Anmeldetag: 30.06.2016
(51) Int. Cl.: F16L 13/11, F16L 37/14, F16L 37/084, F16L 47/02

(54) **ROHR, INSBESONDERE KANALISATIONSROHR**
PIPE, PARTICULARLY SEWAGE PIPE
TUYAU, EN PARTICULIER TUYAU DE CANALISATION

(30) Priorität: 30.06.2015 DE 102015110510; 21.12.2015 DE 102015122332
(43) Veröffentlichungstag der Anmeldung: 04.01.2017
(73) Patentinhaber: Zimmer, Werner, 66557 Illingen (DE)
(72) Erfinder: Zimmer, Werner, 66557 Illingen (DE)
(74) Vertreter: Patentanwälte Bernhardt / Wolff Partnerschaft mbB

(56) Entgegenhaltungen:
- EP-A1- 1 845 299
- WO-A1-97/48937
- DE-A1-102008 027 382
- DE-B- 1 182 483
- GB-A- 2 478 665
- GB-A- 2 503 938
- US-A- 170 473

## Beschreibung

Die Erfindung betrifft ein Rohr, insbesondere Kanalisationsrohr, das zumindest eine Einrichtung zu seiner Verbindung umfasst, wobei das Rohr ein Verbindungselement und einen Rohrabschnitt aufweist, an dessen Rohrwand zumindest abschnittsweise eine Nut gebildet ist, welche zum Halten des Verbindungselements an dem Rohrabschnitt vorgesehen ist, wobei in dem Rohrabschnitt zumindest eine durch die Rohrwand führende Bohrung gebildet ist, die in die Nut mündet und durch die hindurch sich das Verbindungselement in die Nut einbringen und/oder aus der Nut herausnehmen lässt und das Verbindungselement durch einen vorgefertigten, einen Kunststoff aufweisenden, Strang gebildet ist, wobei der Strang sich in einer Montageposition, in der sich das Rohr mit einem anderen Rohr verbinden lässt, in der Nut zusammenlegen lässt und dazu vorgesehen ist, sich selbsttätig aus der Montageposition in eine Halteposition zu öffnen, in der der Strang aus der Nut vorsteht.
Die DE 1 182 483 beschreibt ein Verbindungselement für eine zugfeste Verbindung von Rohren, die nahe ihren Enden mit umlaufenden Nuten versehen sind, die mit umlaufenden Nuten, die in die Rohrenden muffenartig umgebenden Teilen vorgesehen sind, in der Weise zusammengesetzt werden können, dass in einen durch jeweils zwei sich deckende Nuten gebildeten Kanal ein langgestrecktes biegsames Verbindungselement einführbar ist. Der äußere muffenartige Teil ist mit einer Durchbrechung zum Einführen des Verbindungselements versehen. Das Verbindungselement ist ein Metallseil, dass in ein gummielastisches Material eingebettet ist.

Die DE 10 2008 027 382 A1 beschreibt ein Rohr sowie ein für das Rohr vorgesehenes Fitting, die ineinander schiebbare Kontaktflächen aufweisen, welche mit mindestens einem Paar einander gegenüberliegender Vertiefungen versehen sind, die gemeinsam einen Aufnahmeraum für ein Verriegelungselement bilden, das sich durch eine im dem Rohr vorgesehene Öffnung hindurch in die Vertiefungen einschieben lässt.

Aus der WO 97/48937 geht eine Einrichtung zur Verbindung von Rohren hervor, die eine auf ihrer Innenseite mit einer Nut versehene Muffe umfasst. Zur Verbindung der Muffe mit einem Rohr wird die Muffe auf das Rohr derart aufgeschoben, dass die Nut der Muffe über einer in der Außenseite des Rohrs vorgesehenen Nut sitzt und durch eine in der Muffe außen vorgesehenen Öffnung ein Verbindungselement eingeschoben werden kann, das Federfinger aufweist, die sich nach Einsatz des Verbindungselements in den Raum zwischen der Muffe und dem Rohr in die Nut des Rohrs bewegen. Zum Abdichten der Muffe gegen das Rohr sind in der Muffe und dem Rohr mit Dichtungen zu belegende Nuten vorgesehen.

Weitere Rohre, die mit Einrichtungen zu ihrer Verbindung versehen sind und Verfahren zur Verbindung von Rohren gehen aus der GB 2 478 665 A, der EP 1 845 299 A1, der US 170 473 A und der GB 2 503 938 A hervor.

Ferner ist durch Benutzung bekannt, Rohre durch sogenannte Rastermuffen zu verbinden. Auf der Innenseite der Rastermuffen sind Rastelemente vorgesehen, die dazu vorgesehen sind, mit auf den Rohren vorgesehenen Gegenstücken zusammenwirken, um die Rohre und die Rastermuffen zusammenzuhalten. Problematisch ist, dass durch Rastermuffen verbundene Rohre nur mit verhältnismäßig geringen Zugkräften beaufschlagt werden können.

Der Erfindung liegt die Aufgabe zugrunde, ein Rohr der eingangs genannten Art zu schaffen, das sich einfacher verbinden lässt.

Erfindungsgemäß wird diese Aufgabe dadurch gelöst, dass der Strang als Kern ein Federelement, das den Strang in die Halteposition bewegt, und einen das Federelement einbettenden Mantel aus Kunststoff aufweist.

Zur Herstellung der Verbindung werden der Rohrabschnitt und ein Gegenstück, das z.B. durch einen Rohrabschnitt eines anderen Rohres oder einer Einrichtung zum Schließen des Rohres gebildet sein kann, in einer Stellung, in der die Verbindung gebildet werden soll, ineinandergesteckt und das Verbindungselement, vorzugsweise von der Rohraußenseite oder von der Rohrinnenseite aus, durch die Bohrung hindurch in die Nut eingebracht. Das Verbindungselement sitzt dann einerseits in der Nut, andererseits greift es an dem Gegenstück an und hält die Verbindungseinrichtung und das Gegenstück aneinander.
Die sich durch die Erfindung eröffnende Möglichkeit, erst nach dem Aufsetzen des Rohrabschnitts auf das Gegenstück das Verbindungselement in die Nut einzuführen, hat sich als besonders vorteilhaft für die Formauswahl und die Dimensionierung des Verbindungselements sowie der Nut erwiesen, da der Rohrabschnitt und das Verbindungselement nicht dazu vorgesehen sein müssen, dass sich der Rohrabschnitt gemeinsam mit dem Verbindungselement, ggf. unter jeweiliger eigener Verformung oder unter Verformung des Gegenstücks, aufeinandergesetzt werden können. Daher lassen sich das Verbindungselement und die Nut der erfindungsgemäßen Verbindungseinrichtung in Dimensionen ausbilden, die vergleichsweise eine größere Querschnitte aufweisen und dadurch geeignet sind, wesentlich größere Haltekräfte auszuüben.

Vorteilhaft kann der Strang, wenn er in der erfindungsgemäßen Weise zusammenlegbar ist, vor Zusammensetzen des Rohrs mit dem Gegenstück in die Nut eingesetzt werden und anschließend das Rohr und das Gegenstück zusammengesetzt werden, wobei der Strang in die Montageposition geklappt und beim Zusammensetzen durch das Gegenstück gehalten wird. Sobald das Rohr und das Gegenstück derart aufeinandersitzen, dass sich die jeweiligen Nuten von Rohr und Gegenstück gegenüberliegen, bewegt sich der Strang in die Halteposition und hält den Rohrabschnitt und das Gegenstück zusammen.

Ferner ergibt sich der Vorteil, dass bei der Auswahl der Form der Nut sowie der Form des Verbindungselements nicht auf deren gegenseitiges Zusammenwirken beim Zusammenstecken des Rohrabschnitts mit dem Gegenstück in der Axialrichtung Rücksicht genommen werden muss und deshalb eine wesentlich größere Gestaltungsfreiheit besteht, sodass die Nut z.B. mit einer Hinterschneidung versehen werden kann.
Darüber hinaus kann das Verbindungselement durch die Bohrung aus der Nut herausgenommen werden, um die Verbindung zu lösen. Das Gegenstück lässt sich dann wieder aus dem Rohrabschnitt herausnehmen.

Zweckmäßigerweise ist die Verbindungseinrichtung an zumindest einem Ende des Rohrs, vorzugsweise an beiden Enden des Rohrs, gebildet.
In einer Ausgestaltung der Erfindung ist die Nut eine auf einer Innenseite des Rohrabschnitts gebildete Innennut oder/und eine auf einer Außenseite des Rohrabschnitts gebildete Außennut.

Die Verbindungseinrichtung weist zweckmäßigerweise an dem einem Ende des Rohrs die Innennut und an dem anderen Ende die Verbindungseinrichtung die Außennut auf, wobei die Formen der jeweiligen Rohrabschnitte vorzugsweise derart aneinander angepasst sind, dass die Rohrabschnitte aufeinandersteckbar sind, sodass sich zwei oder mehrere der Rohre aufeinanderstecken lassen.
Zweckmäßigerweise sind die Innen- und die Außendurchmesser der Rohrabschnitte an den beiden Enden derart aneinander angepasst, dass die Rohrabschnitte aufeinandersteckbar sind, vorzugsweise derart, dass sie im aufeinandergesteckten Zustand passend aufeinandersitzen. Vorzugsweise sind sie in ihren Maßen derart aneinandergepasst, dass sie sich dicht, insbesondere flüssigkeitsdicht oder gasdicht, miteinander verbinden lassen.
Die Verbindungseinrichtung kann darüber hinaus mit einer Dichteinrichtung versehen sein, z.B. einem Dichtungsring zur Anordnung in einer dafür im Rohrabschnitt vorgesehenen Dichtungsnut.
Vorteilhaft lässt sich aus mehreren der erfindungsgemäßen Rohre eine Rohrverbindung bilden, indem die Rohre mit den jeweils passenden Enden aufeinandergesetzt werden.
Ferner wäre vorstellbar, die Verbindungseinrichtung an beiden Enden des Rohrs durch die auf der Innenseite des Rohrabschnitts gebildete Innennut oder durch die auf der Außenseite des Rohrabschnitts gebildete Außennut zu bilden. In diesem Fall müssten zum Aufbau einer Rohrleitung abwechselnd eines der Rohre mit den Innennuten und eines mit den Außennuten aufeinandergesetzt und miteinander verbunden werden. Es versteht sich, dass auch bei dieser Variante die Formen der jeweiligen Rohrabschnitte wie oben erläutert aneinander angepasst sein können.

In einer Ausgestaltung der Erfindung sind jeweils zwei in die Nut mündende Bohrungen gebildet und die Bohrungen derart vorgesehen, dass sich das Verbindungselement durch eine der Bohrungen in die Nut einbringen und ggf. durch die andere Bohrung aus der Nut herausnehmen lässt. Das Verbindungselement kann durch eine der Bohrungen aus der Nut herausgedrückt werden, indem auf ein Ende des Verbindungselements, ggf. mit einem dazu vorgesehenen Werkzeug der Verbindungseinrichtung, Druck ausgeübt wird. Während es vorstellbar wäre, am Rohrabschnitt mehrere der Nuten mit zugehöriger Bohrung vorzusehen, ist die Nut in der bevorzugten Ausführungsform der Erfindung zusammenhängend auf zumindest einer Länge von ¾ des Innen- bzw. Außenumfangs des Rohrabschnitts vorgesehen.

Zweckmäßigerweise sind die Bohrungen vorgesehen derart, dass sie höchstens in einem derart großen Abstand voneinander in die Nut einmünden, dass der Abstand zwischen Mündungsstellen der Bohrungen in die Nut höchstens ein Fünftel, vorzugsweise höchstens ein Sechstel, des Gesamtumfangs des Rohrabschnitts beträgt.

In einer Ausführungsform der Erfindung weisen das Verbindungselement und der Rohrabschnitt derart aneinander angepasste Formen auf, dass bei Anordnung des Verbindungselements in dem Rohrabschnitt eine Bewegung des Verbindungselements gegenüber dem Gegenstück zumindest in einer der Axialrichtungen des Gegenstücks oder des Rohrabschnitts und vorzugsweise in Radialrichtung des Gegenstücks oder des Rohrabschnitts blockiert ist. Das Verbindungselement und das Rohr lassen sich dann fest miteinander verbinden.

Zweckmäßigerweise sind die Formen des Verbindungselements und Nut derart aneinander angepasst, dass das Verbindungselement bei Anordnung in der Nut in zumindest einer der Axialrichtungen des Rohrabschnitts in dem Rohrabschnitt verhakt ist. In der bevorzugten Ausführungsform der Erfindung ist eine auf diese Weise gebildete Verhakung vorgesehen derart, dass das Verbindungselement bei Belastung des Rohrabschnitts und des Gegenstücks gegeneinander auf Zug oder auf Druck in einer der Axialrichtungen des Rohrs nicht aus der Nut herausbewegbar ist.

In einer Ausführungsform der Erfindung ist die Nut mit einer Hinterschneidung versehen, in die das Verbindungselement eingreift, wenn es in die die Nut eingesetzt ist. Auf diese Weise lässt sich vermeiden, dass das Verbindungselement z.B. bei mechanischer Belastung aus der Nut herausbewegt wird. Vorzugsweise weist das Verbindungselement zumindest einen Abschnitt, bevorzugt einen Hakenabschnitt, auf, der dazu vorgesehen ist, in die Hinterschneidung hinein vorzustehen.

Als besonders vorteilhaft hat es sich erwiesen, die Nut mit trapezförmigem Querschnitt zu versehen, bei dem die längere der Trapezgrundseiten am Nutenboden angeordnet ist. Es versteht sich, dass das Verbindungselement dann einen in die jeweilige Nut passenden trapezförmigen Abschnitt aufweist.

Zweckmäßigerweise weist der Strang eine ausreichend große Festigkeit auf, um in die Außen- und/oder die Innennut eingeschoben zu werden. Bevorzugt wird der Strang aus Federstahl, Ethylen-Propylen-Dien-Kautschuk (EPDM), Polypropylen (PP), Polyethylen (PE) oder faserverstärktem, vorzugsweise glasfaserverstärktem oder kohlefaserverstärktem, Kunststoff gebildet.

In einer Weiterbildung der Erfindung ist in oder an dem vorgefertigten Strang eine Einrichtung zum Erwärmen des Strangs vorgesehen, die vorzugsweise einen Heizwiderstand umfasst, und der Strang lässt sich nach Anordnung in der Nut mittels der Erwärmungseinrichtung erweichen, vorzugsweise verflüssigen. Vorteilhaft lässt sich das Rohr durch Erweichen des Strangs noch fester mit dem Gegenstück verbinden. Eine besonders stabile Verbindung lässt sich ausbilden, wenn die Wände der Nut im Vergleich zur Rohrinnen- oder/und -außenseite zur Vergrößerung der Haftung des Strangmaterials an den Wänden eine vergrößerte Rauigkeit und/oder eine Oberflächenstrukturierung aufweisen.

In der bevorzugten Ausführungsform umfasst der Stang als Kern ein metallisches Federelement und einen das Federelement einbettenden Mantel aus Kunststoff, insbesondere aus einem der obengenannten Kunststoffe. Zum einen kann durch das Federelement sichergestellt werden, dass sich der Strang selbsttätig ausreichend weit in die Halteposition bewegt und dem Strang eine größere mechanische Stabilität verliehen werden, zum anderen kann das Federelement zusätzlich als Erwärmungseinrichtung dienen, wenn es wie ein Heizwiderstand mit einer elektrischen Spannung beaufschlagt wird. In diesem Fall kann der Mantel durch Erwärmung erweicht werden, um wie oben erläutert einen besseren Verbund zwischen dem Rohr und dem Strang zu erreichen.
Zwischen dem Verbindungselement und den Nutenwänden verbleibende Hohlräume können wie oben erläutert durch Einbringen, vorzugsweise Einspritzen, eines weiteren Verbindungselements im weichen, insbesondere flüssigen, Zustand aufgefüllt werden.

In einer besonders bevorzugten Ausführungsform der Erfindung ist das Rohr zur Bildung einer Rohrleitung in einer Kanalisation geeignet. Die eingangs genannte elliptische oder ovale Querschnittsform erweist sich dafür als vorteilhaft, da bei kleinen Flüssigkeitsmengen verhältnismäßig große Fließgeschwindigkeiten erreicht werden können und damit gute Spül- und Selbstreinigungseffekte erzielbar sind. Darüber hinaus können auch größere Wassermengen gut abfließen. Ferner kann eine besonders gute mechanische Stabilität erreicht werden. Die genannten Vorteile lassen sich insbesondere dann erreichen, wenn das Rohr ovalen oder elliptischen Querschnitts derart angeordnet wird, dass, bezogen auf den Querschnitt ein Abschnitt kleineren Radius der elliptischen oder ovalen Form unten angeordnet, da sich dann bei geringen Flüssigkeitsmengen die Flüssigkeit dort ansammeln und besser abfließen kann.

Ein besonderer Vorteil der stabilen Verbindung, die mit der erfindungsgemäßen Verbindung zwischen den Rohren erreicht werden kann, ist, dass mehrere der mit einander verbundenen Rohre sich unter Zug verlegen lassen. Zum Beispiel kann die zu bildende Rohrleitung unter Angriff an einem Ende, z.B. einem Kopfteil, in eine Bohrung, in der die Rohrleitung verlegt werden soll, oder in eine bereits vorhandene, sanierungsbedürftige Kanalisation, die durch ein Rohr oder einen Kanal, insbesondere Betonkanal, gebildet sein kann, gezogen werden. Dazu ist zweckmäßigerweise eine Einzugsvorrichtung vorgesehen, die am Kopfteil der Rohrleitung angreift. Die Rohrleitung wird dann nach und nach in die Bohrung hineingezogen, wobei die einzelnen Rohre sukzessive mittels des Verbindungselements miteinander verbunden werden, um die Rohrleitung zu bilden.

Zweckmäßigerweise ist das Rohr auf Druck in Längsrichtung belastbar derart, dass sich eine sukzessive aus mehreren der Rohre gebildete Rohrleitung unter Druck verlegen lässt. Je nach Beschaffenheit einer Umgebung, in der die Rohrleitung zu verlegen ist, kann auch eine Beaufschlagung mit Druck und mit Zug, ggf. gleichzeitig, durchgeführt werden.

Die Erfindung wird nachfolgend anhand von Ausführungsbeispielen und den beigefügten Zeichnungen, die sich auf diese Ausführungsbeispiele beziehe, näher erläutert. Es zeigen:
- Fig. 1: ein Rohr im Schnitt,
- Fig. 2: perspektivisch ein nicht unter Anspruch 1 fallendes Verbindungselement des Rohrs nach Fig. 1,
- Fig. 3: im Querschnitt das Rohr nach Fig. 1 in einer Stellung, in der es sich mit einem weiteren Rohr zusammensetzen lässt,

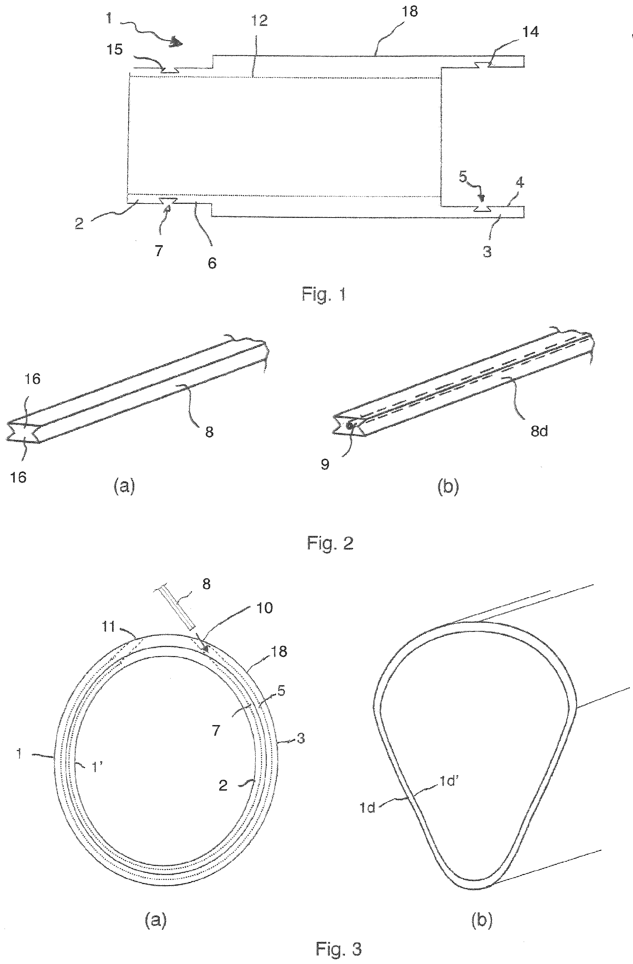

- Fig. 3: perspektivisch ein Verbindungselement des erfindungsgemäßen Rohrs nach Fig. 1,

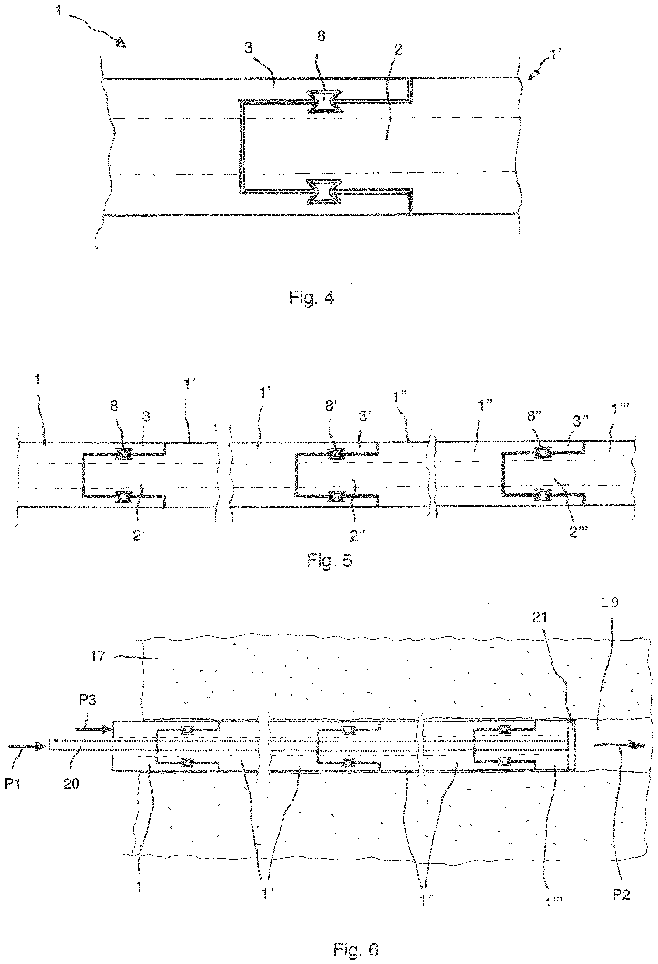

- Fig. 4: die Rohre nach Fig. 3 im Längsschnitt,
- Fig. 5: mehrere miteinander verbundene Rohre im Schnitt,
- Fig. 6: eine aus mehreren Rohren nach Fig. 1 zusammengesetzte Kanalisationsrohrleitung, und

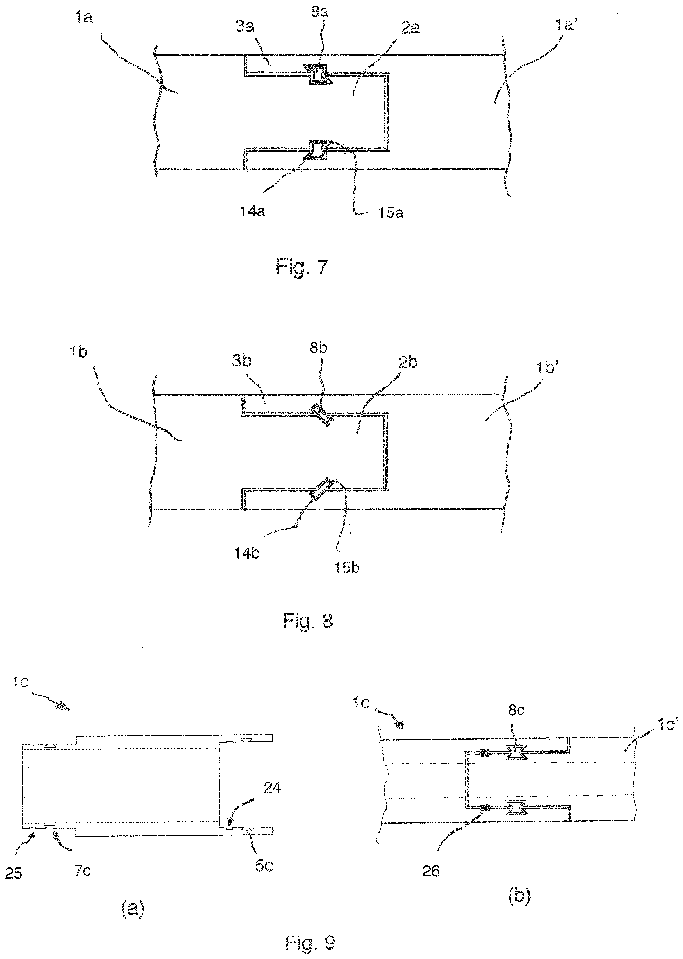

- Fig. 7 bis 9: weitere Rohre, die eine nicht unter Anspruch 1 fallende Verbindungseinrichtung aufweisen,

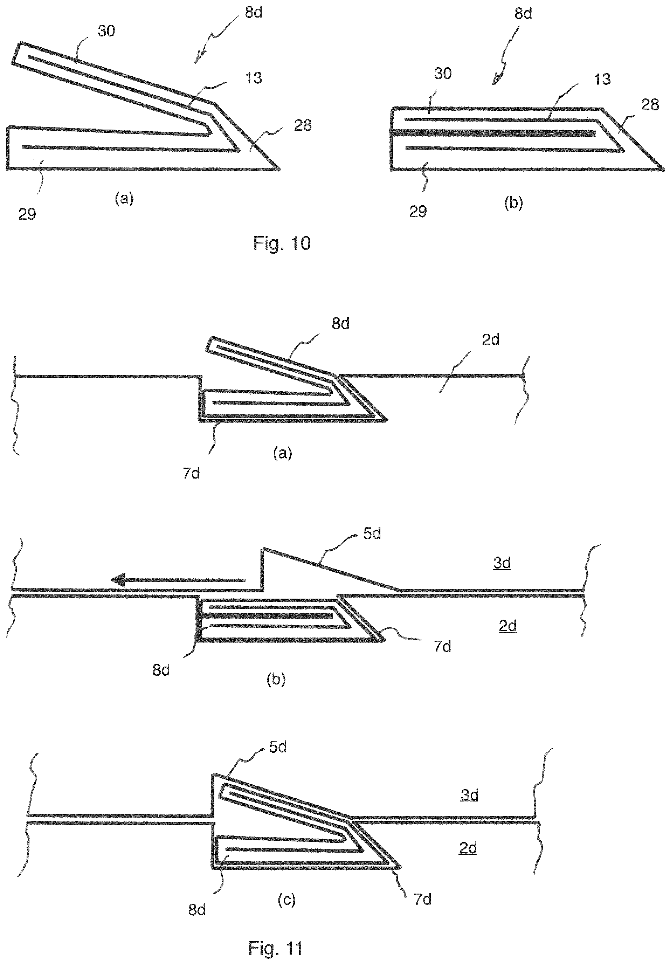

- Fig. 10: eine Ausführungsform eines erfindungsgemäßen Verbindungselements,
- Fig. 11: einen Ausschnitt eines weiteren erfindungsgemäßen Rohrs im Längsschnitt in verschiedenen Montagepositionen, und

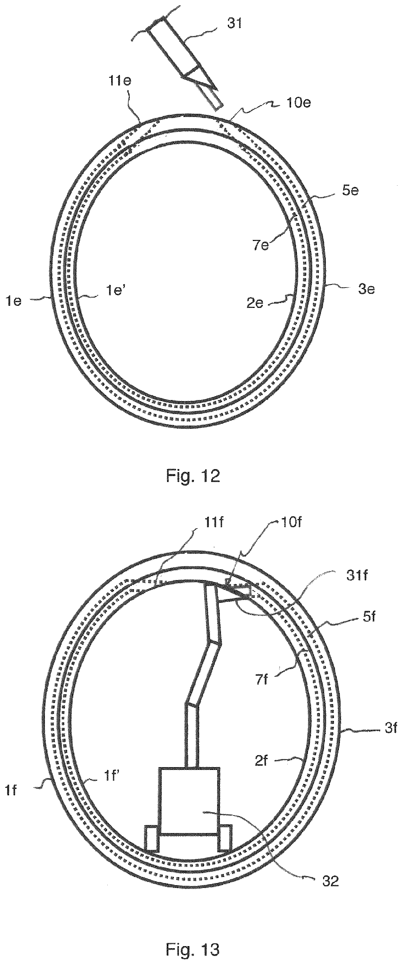

- Fig. 12: ein weiteres Rohr im Querschnitt, und
- Fig. 13: ein weiteres Rohr im Querschnitt bei Anordnung eines Verbindungselements.

In Fig. 1 ist im Schnitt ein Rohr 1 gezeigt, das an einem Ende einen Rohrabschnitt 3 aufweist, auf dessen Innenseite 4 eine im Querschnitt trapezförmige Innennut 5 gebildet ist, die Hinterschneidungen 14 aufweist. An dem anderen Ende des Rohrs 1 ist ein weiterer Rohrabschnitt 2 vorgesehen, auf dessen Außenseite 6 eine ebenfalls mit Hinterschneidungen 15 versehene, im Querschnitt trapezförmige Außennut 7 vorgesehen ist. Mit einer mit dem Bezugszeichen 12 gekennzeichneten gestrichelten Linie ist eine Innenwandung des Rohrs 1 gezeigt.

Wie Fig. 3a zeigt, sind auf einer Außenseite 18 des Rohrabschnitts 3 Bohrungen 10,11 vorgesehen, die in die Innennut 5 einmünden und durch die sich ein in Fig. 2 dargestelltes Verbindungselement 8, das zwei im Querschnitt trapezförmige, in die Innennut 5 und die Außennut 7 passende Abschnitte 16 aufweist, in die Innennut 5 und die Außennut 7 einführen lässt. Es versteht sich, dass der Rohrabschnitt 2 auf seiner Außenseite 11 in dem Bereich, in dem die Bohrung 10,11 in die Innennut 5 mündet, mit einer Öffnung versehen ist, durch die hindurch sich das Verbindungselement 8 in die Außennut 7 einführen lässt.

Anstatt der in Fig. 3a gezeigten elliptischen Querschnittsform könnten die Rohre 1,1' auch eine kreisrunde, ellipsenförmige oder ovale Querschnittsform, z.B. wie in Fig. 3b gezeigt, aufweisen.

Zur Verbindung des Rohrs 1 nach Fig. 1 mit weiteren Rohren 1',1", die in gleicher Weise ausgebildet sind wie das Rohr 1 nach Fig. 1, werden jeweils ein Rohrabschnitt 3,3',3" und ein weiterer Rohrabschnitt 2',2",2'''derart ineinandergesteckt, dass die Innennuten und die Außennuten übereinanderliegen, und anschließend das Verbindungselement 8 durch eine der Bohrungen 10,11, die auf einer Außenseite des jeweiligen Rohrabschnitts 3,3',3" vorgesehen ist und die in die jeweiligen Innennuten 5 münden, gleichzeitig in die Innen- und Außennuten eingeschoben.
Das Verbindungselement 8 sitzt dann wie in den Figuren 4 und 5 gezeigt in den Innen- und Außennuten und hält die Rohre 1,1',1",1"' zusammen.

Das Verbindungselement 8 greift dank seiner Trapezform in die Hinterschneidungen 14,15 der Innennut 5 und der Außennut 7 ein. Mit dem jeweiligen Abschnitt, mit dem das Verbindungselement 8 in die hinterschnittenen Abschnitte 14,15 vorsteht, wird ein hakenartiger Eingriff erzeugt, durch den verhindert wird, dass sich die jeweiligen Rohre 1,1'1,",1"' auseinanderziehen lassen.
Um die Rohre 1,1',1" wieder voneinander zu trennen, werden die jeweiligen Verbindungselemente 8,8',8'' entweder aus der Außennut 7 und der Innennut 5 herausgezogen oder mittels eines Werkzeugs, das ggf. denselben Querschnitt aufweist wie das Verbindungselement 8,8',8" aus der Außennut 7 und der Innennut 5 herausgedrückt, indem das Werkzeug in eine der Bohrungen 10,11 hineingeschoben wird.

In Fig. 6 ist gezeigt, wie sich die Rohre 1,1',1",1"' in einer Bohrung 19 in einem Untergrund 17, z.B. im Erdreich, verlegen lassen. An einer Öffnung der Untergrundbohrung 19 werden nacheinander die Rohre 1''',1'',1' und 1 in die Untergrundbohrung 19 eingesetzt, jeweilig durch die Verbindungselemente 8 miteinander verbunden und mittels einer Einzugseinrichtung in die Untergrundbohrung 19 eingezogen. Ein Stab 20 der Einzugseinrichtung stützt sich dazu an einem Gegenhalter 21, der an einem Ende des Rohrs 1"' vorgesehen ist, ab und drückt bei Kraftausübung auf den Stab 20 in Richtung des Pfeils P1 das Gegenstück 21 mit dem Rohr 1"' in Richtung des Pfeils P2 in die Untergrundbohrung 19 hinein. Die jeweils nachfolgenden Rohre 1"',1",1' werden vom Rohr 1'" mittels der Verbindungselemente 8",8' und 8, die dazu eingerichtet sind, die dabei auftretenden Zugkräfte zu übertragen und ihnen standzuhalten, mitgezogen. Ergänzend könnte an dem einem Ende des Rohrs 1, wie anhand des Pfeils P3 gezeigt ist, zusätzlich Kraft auf das Rohr 1 und damit unter gegenseitiger Belastung auf Druck auf die Rohre 1',1",1"' aufgebracht werden, um die Rohre 1,1',1",1"' in die Untergrundbohrung 19 einzuschieben.
Es versteht sich, dass die Rohre 1,1',1",1"' auch lediglich durch Einschieben unter gegenseitiger Druckbelastung verlegt werden könnten.

Es wird nun auf die Figuren 2b und 7 bis 13 Bezug genommen, wo gleiche oder gleichwirkende Teile derselben Bezugszahl wie in den Figuren 1 bis 6 bezeichnet sind und der betreffenden Bezugszahl jeweils ein Buchstabe beigefügt ist.

Wie Fig. 2b zu entnehmen ist, könnte in Längsrichtung eines Verbindungselements 8d durch das Verbindungselement 8d ein Draht 9, insbesondere ein Kupferdraht, zur Erhitzung des Verbindungselements 8d angeordnet sein. Sofern das Verbindungselement 8d ein schmelzbares, insbesondere thermoplastisches, Material aufweist, kann mittels des Drahts 9 bei entsprechender elektrischer Kontaktierung und durch Belegung mit elektrischer Spannung das Verbindungselement 8d erwärmt und dadurch erweicht, ggf. sogar aufgeschmolzen, werden, um einen besseren Verbund zwischen dem Verbindungselement 8d und den Wänden der jeweiligen Nuten 5,7 zu erreichen.

Bei der Verbindungseinrichtung nach Fig. 7 weisen eine Innennut 5a und eine Außennut 7a je eine Hinterschneidung 14a,15a nur in jeweils einer, jedoch gegensätzlicher Axialrichtung auf. Insbesondere bei Belastung auf Zug verhindern diese Formen, dass die Innennut 5a oder die Außennut 7a über das Verbindungselement 8a gleiten können.

Die Verbindungseinrichtung nach Fig. 8 umfasst ein Verbindungselement 8b mit rechteckiger Querschnittsform. Eine Innennut 5b und eine Außennut 7b sind quer zur jeweiligen Rohrachse gebildet und stehen in Richtung eines Endes eines Rohrabschnitts 3b bzw. eines Endes eines Rohrabschnitts 2b vor.

Wie Fig. 9 zu entnehmen ist, könnten Rohrabschnitte 2c,3c eines Rohrs 1c zur Aufnahme eines Verbindungselements 8c zusätzlich mit Dichtungsnuten 24,25 zur Aufnahme eines Dichtungselements 26, insbesondere eines Dichtungsrings, vorgesehen sein. Abweichend von Fig. 9 könnten mehrere solcher Dichtungsnuten und dementsprechend mehrere Dichtungselemente vorgesehen sein, um die Dichtwirkung zu verbessern. Es versteht sich, dass die Nuten bzw. die Dichtungselemente unabhängig von der jeweiligen Ausgestaltung des Rohrabschnitts, des Rohrabschnitts und des Verbindungselements für erfindungsgemäße Verbindungseinrichtungen vorgesehen sein können, insbesondere auch für die Rohre nach den Figuren 1 bis 8 und 10 bis 13.

Fig. 10 zeigt ein erfindungsgemäßes Verbindungselement 8d, das einen Federkern 13 aus Stahl und einen den Federkern vollständig umgebenden Mantel 28 aus einem, z.B. thermoplastischen, Kunststoff aufweist. In Fig. 10a ist das Verbindungselement 8d in einem mechanisch unbelasteten Zustand dargestellt, in dem ein Kopfteil 30 des Verbindungselements 8d von einem Fußteil 29 absteht. Fig. 10b zeigt es in einem zusammengedrückten Zustand, in dem der Kopfteil 30 auf dem Fußteil 29 aufliegt.
Zum Verbinden zweier Rohre wird das Verbindungselement 8d mit seinem Fußteil 29 in eine Außennut 7d eines Rohrabschnitts 2d eines Rohrs eingesetzt (vgl. Position in Fig. 11a), anschließend ein Rohrabschnitt 3d eines anderen Rohrs auf den Rohrabschnitt 2d aufgeschoben, wobei der Kopfteil 30 durch den Rohrabschnitt 3d auf den Fußteil 29 aufgedrückt wird (vgl. Position in Fig. 11b). Sobald eine Innennut 5d über der Außennut 7d angeordnet ist, klappt der Klopfteil 30 von dem Fußteil 29 weg und blockiert die Rohrabschnitte 2d,3d gegeneinander (vgl. Position in Fig. 11c).
Der sich in den Nuten 5d,7d im zusammengesetzten Zustand bildende Hohlraum könnte wie unten anhand von Fig. 12 erläutert mit Kunststoff aufgefüllt werden.

Bei in Fig. 12 dargestellten Rohren 1e,1e' wird eine Verbindung dadurch hergestellt, dass durch eine Bohrung 10e ein flüssiger Kunststoff, z.B. ein noch nicht ausgehärtetes Duroplast oder ein durch Erwärmen erweichter Thermolast mittels einer Einrichtung zum Einbringen des Kunststoff 31 in Nuten 5e,7e eingespritzt wird. Nach Füllung der Nuten 5e,7e mit dem Kunststoff wird der Kunststoff aushärten gelassen. Die Verbindung ist nun fest.

Fig. 13 zeigt, wie ein nicht begehbares Rohr mittels eines Roboters 32, der mit einer Einrichtung zum Einbringen von Kunststoff 31f versehen ist, über auf einer Innenseite eines Rohrs 1f' vorgesehene Bohrung 10f in gleicher Weise wie oben für Fig. 12 beschrieben miteinander verbunden werden kann.

## Patentansprüche

1. Rohr, insbesondere Kanalisationsrohr, das zumindest eine Einrichtung zu seiner Verbindung umfasst, wobei das Rohr (1) ein Verbindungselement (8) und einen Rohrabschnitt (2,3) aufweist, an dessen Rohrwand zumindest abschnittsweise eine Nut (5,7) gebildet ist, welche zum Halten des Verbindungselements (8) an dem Rohrabschnitt (2,3) vorgesehen ist, wobei in dem Rohrabschnitt (2,3) zumindest eine durch die Rohrwand führende Bohrung (10,11) gebildet ist, die in die Nut (5,7) mündet und durch die hindurch sich das Verbindungselement (8) in die Nut (5,7) einbringen und/oder aus der Nut (5,7) herausnehmen lässt und das Verbindungselement (8) durch einen vorgefertigten, einen Kunststoff aufweisenden, Strang gebildet ist, wobei der Strang sich in einer Montageposition, in der sich das Rohr (1) mit einem anderen Rohr (1',1",1"') verbinden lässt, in der Nut (5,7) zusammenlegen lässt und dazu vorgesehen ist, sich selbsttätig aus der Montageposition in eine Halteposition zu öffnen, in der der Strang aus der Nut (5,7) vorsteht,
**dadurch gekennzeichnet,**
**dass** der Strang als Kern ein Federelement (13), das den Strang in die Halteposition bewegt, und einen das Federelement (13) einbettenden Mantel (28) aus Kunststoff aufweist.

2. Rohr nach Anspruch 1,
**dadurch gekennzeichnet,**
**dass** die Verbindungseinrichtung an zumindest einem Ende des Rohrs (1), vorzugsweise an beiden Enden des Rohrs (1), gebildet ist.

3. Rohr nach Anspruch 1 oder 2,
**dadurch gekennzeichnet,**
**dass** die Nut (5,7) eine auf einer Innenseite (4) des Rohrabschnitts (3) gebildete Innennut (5) oder/und eine auf einer Außenseite (6) des Rohrabschnitts (2) gebildete Außennut (7) ist und
a) die Verbindungseinrichtung an dem einem Ende des Rohrs (1) die Innennut (5) und an dem anderen Ende die Verbindungseinrichtung die Außennut (7) aufweist, wobei die Formen der Rohrabschnitte (2,3) vorzugsweise derart aneinander angepasst sind, dass die Rohrabschnitte (2,3) aufeinandersteckbar sind, oder
b) die Verbindungseinrichtung an beiden Enden des Rohrs (1)
• die Innennut (5) oder
• die Außennut (7) aufweist.

4. Rohr nach einem der Ansprüche 1 bis 3,
**dadurch gekennzeichnet,**
**dass** das Verbindungselement (8) und die Nut (5,7) derart aneinander angepasste Formen aufweisen, dass bei Anordnung des Verbindungselements (8) in der Nut (5,7) eine Bewegung des Verbindungselements (8) in dem Rohr (1) in zumindest einer der Axialrichtungen des Rohrs (1), insbesondere in beiden Axialrichtungen, und vorzugsweise in Radialrichtung des Rohrs (1) blockiert ist.

5. Rohr nach einem der Ansprüche 1 bis 4,
**dadurch gekennzeichnet,**
**dass** sich der Strang nach Anordnung in der Nut (5,8) erweichen, besonders bevorzugt verflüssigen, lässt.

6. Rohr nach einem der Ansprüche 1 bis 5,
**dadurch gekennzeichnet,**
**dass** in oder am dem vorgefertigten Strang eine Einrichtung (9) zum Erwärmen des Strangs vorgesehen ist, die vorzugsweise einen in oder an dem Strang angeordneten Heizwiderstand umfasst.

7. Rohr nach einem der Ansprüche 1 bis 6,
**dadurch gekennzeichnet,**
**dass** die Nut (5,7) mit einer Hinterschneidung (13,14) versehen ist, in die das Verbindungselement (8) eingreift, wobei das Verbindungselement (8) vorzugsweise zumindest einen Abschnitt (16) aufweist, der dazu vorgesehen ist, in die Hinterschneidung (13,14) vorzustehen.

8. Rohr nach Anspruch 7,
**dadurch gekennzeichnet,**
**dass** das Verbindungselement (8), eine Außennut (7) und eine Innennut (5) derart aneinander angepasste Formen aufweisen, dass bei gleichzeitiger Anordnung des Verbindungselements (8) in der Außennut (7) und der Innennut (5) eine Bewegung des Verbindungselements (8) in dem Rohr (1) in zumindest einer der Axialrichtungen des Rohrs (1) blockiert ist, wobei das Verbindungselement (8) bei Anordnung in der Außennut (7) und der Innennut (5) in Axialrichtung des Rohrs (1) vorzugsweise in der Außennut (7) und der Innennut (5) verhakt ist.

9. Rohr nach einem der Ansprüche 1 bis 8,
**dadurch gekennzeichnet,**
**dass** das Rohr (1) im Querschnitt rund, ellipsenförmig oder ovalförmig ist.

10. Verfahren zum Verbinden eines Rohres (1), insbesondere eines Kanalisationsrohrs, das eine Einrichtung zu seiner Verbindung umfasst, wobei das Rohr (1) ein Verbindungselement (8) und einen Rohrabschnitt (2,3) aufweist, an dessen Rohrwand zumindest abschnittsweise eine Nut (5,7) gebildet ist, welche zum Halten des Verbindungselements (8) an dem Rohrabschnitt (2,3) vorgesehen ist, wobei in dem Rohrabschnitt (2,3) zumindest eine durch die Rohrwand führende Bohrung (10,11) gebildet ist, die in die Nut (5,7) mündet, wobei das Verbindungselement (8) durch die Bohrung (10,11) in die Nut (5,7) eingebracht und/oder aus der Nut (5,7) herausgenommen wird, wobei das Verbindungselement (8) durch einen vorgefertigten, einen Kunststoff aufweisenden Strang gebildet ist, wobei der Strang in einer Montageposition, in der das Rohr (1) mit einem anderen Rohr (1',1",1"') verbunden wird, in der Nut (5,7) zusammengelegt wird und sich selbsttätig aus der Montageposition in eine Halteposition öffnet, in der der Strang aus der Nut (5,7) vorsteht,
**dadurch gekennzeichnet,**
**dass** der Strang als Kern ein Federelement (13), das den Strang in die Halteposition bewegt, und ein das Federelement (13) einbettenden Mantel (28) aus Kunststoff aufweist.

11. Verfahren nach Anspruch 10,
**dadurch gekennzeichnet,**
**dass** zwei oder mehrere der Rohre (1), vorzugsweise zur Bildung einer Kanalisationsrohrleitung, miteinander verbunden werden, wobei die Rohre (1) vorzugsweise an ihren Enden aneinandergesteckt werden.

12. Verfahren nach Anspruch 10 oder 11,
**dadurch gekennzeichnet,**
**dass** der Strang zur Verbindung der Rohre (1) in die Nut (5,7) eingeschoben wird.

13. Verfahren nach Anspruch 12,
**dadurch gekennzeichnet,**
**dass** der vorgefertigte Strang nach seiner Anordnung in der Nut (5,7) erweicht, vorzugsweise verflüssigt, wird.

14. Verfahren nach einem der Ansprüche 11 bis 13,
**dadurch gekennzeichnet,**
**dass** die Rohrleitung, vorzugsweise unterirdisch, unter Zug oder unter Druck verlegt wird, wobei die Rohrleitung bei Verlegung unter Zug vorzugsweise unter Angriff an einem Ende der Rohrleitung in eine Untergrundbohrung, beispielsweise in Beton oder/und Erdreich, oder in eine bereits vorhandene, ggf. sanierungsbedürftige, Kanalisation, gezogen oder gedrückt wird.

## Claims

1. Pipe, in particular sewage pipe, which comprises at least one installation for the connection thereof, wherein the pipe (1) has a connection element (8) and a pipe portion (2, 3), a groove (5, 7) being formed at least in portions on the pipe wall of said pipe portion (2, 3), said groove (5, 7) being provided for holding the connection element (8) on the pipe portion (2, 3), wherein at least one bore (10, 11) that leads through the pipe wall is formed in the pipe portion (2, 3), said bore (10, 11) opening into the groove (5, 7), and the connection element (8) being able to be incorporated into the groove (5, 7) and/or be retrieved from the groove (5, 7) through said bore (10, 11); and the connection element (8) is formed by a prefabricated strand comprising a plastics material, wherein the strand in an assembly position in which the pipe (1) can be connected to another pipe (1', 1", 1"') can be collapsed in the groove (5, 7) and is provided for opening in a self-acting manner from the assembly position to a holding position in which the strand projects from the groove (5, 7), **characterized in that**
the strand as a core has a spring element (13) that moves the strand to the holding position, and a jacket (28) from plastics material that embeds the spring element (13).

2. Pipe according to Claim 1,
**characterized in that**
the connection installation is formed on at least one end of the pipe (1), preferably at both ends of the pipe (1).

3. Pipe according to Claim 1 or 2,
**characterized in that**
the groove (5, 7) is an internal groove (5) that is formed on an internal side (4) of the pipe portion (3), and/or is an external groove (7) that is formed on an external side (6) of the pipe portion (2), and
a) the connection installation has the internal groove (5) on the one end of the pipe (1) and the connection installation has the external groove (7) on the other end, wherein the shapes of the pipe portions (2, 3) are preferably mutually adapted such that the pipe portions (2, 3) are push-fittable onto one another, or
b) the connection installation on both ends of the pipe (1) has
- the internal groove (5) or
- the external groove (7).

4. Pipe according to one of Claims 1 to 3,
**characterized in that**
the connection element (8) and the groove (5, 7) have shapes that are mutually adapted in such a manner that in the disposal of the connection element (8) in the groove (5, 7) any movement of the connection element (8) in the pipe (1) is blocked in at least one of the axial directions of the pipe (1), in particular in both axial directions, and preferably in the radial direction of the pipe (1).

5. Pipe according to one of Claims 1 to 4,
**characterized in that**
the strand after disposal in the groove (5, 8) can be softened, particularly preferably liquefied.

6. Pipe according to one of Claims 1 to 5,
**characterized in that**
an installation (9) for heating the strand is provided in or on the prefabricated strand, said installation (9) preferably comprising a heating resistor that is disposed in or on the strand.

7. Pipe according to one of Claims 1 to 6,
**characterized in that**
the groove (5, 7) is provided with an undercut (13, 14) in which the connection element (8) engages, wherein the connection element (8) preferably has at least one portion (16) which is provided for projecting into the undercut (13, 14).

8. Pipe according to Claim 7,
**characterized in that**
the connection element (8) has an external groove (7) and an internal groove (5) which have shapes that are mutually adapted in such a manner that in the simultaneous disposal of the connection element (8) in the external groove (7) and the internal groove (5) any movement of the connection element (8) in the pipe (1) is blocked in at least one of the axial directions of the pipe (1), wherein the connection element (8) in the disposal in the external groove (7) and the internal groove (5) is jammed in the axial direction of the pipe (1) preferably in the external groove (7) and the internal groove (5).

9. Pipe according to one of Claims 1 to 8,
**characterized in that**
the pipe (1) in the cross-section is round, elliptic, or oval.

10. Method for connecting a pipe (1), in particular sewage pipe, which comprises an installation for the connection thereof, wherein the pipe (1) has a connection element (8) and a pipe portion (2, 3), a groove (5, 7) being formed at least in portions on the pipe wall of said pipe portion (2, 3), said groove (5, 7) being provided for holding the connection element (8) on the pipe portion (2, 3), wherein at least one bore (10, 11) that leads through the pipe wall is formed in the pipe portion (2, 3), said bore (10, 11) opening into the groove (5, 7), wherein the connection element (8) is incorporated into the groove (5, 7) and/or is retrieved from the groove (5, 7) through the bore (10, 11), wherein the connection element (8) is formed by a prefabricated strand comprising a plastics material, wherein the strand in an assembly position in which the pipe (1) is connected to another pipe (1', 1", 1"') is collapsed in the groove (5, 7) and in a self-acting manner opens from the assembly position to a holding position in which the strand projects from the groove (5, 7),
**characterized in that**
the strand as a core has a spring element (13) that moves the strand to the holding position, and a jacket (28) from plastics material that embeds the spring element (13).

11. Method according to Claim 10,
**characterized in that**
two or a plurality of the pipes (1) are connected to one another preferably for forming a sewage pipeline, wherein the pipes (1) are plug-fitted to one another preferably at the ends thereof.

12. Method according to Claim 10 or 11,
**characterized in that**
the strand is pushed into the groove (5, 7) in order for the pipes (1) to be connected.

13. Method according to Claim 12,
**characterized in that**
the prefabricated strand after the disposal thereof in the groove (5, 7) is softened, preferably liquefied.

14. Method according to one of Claims 11 to 13,
**characterized in that**
the pipeline is installed under tension or compression, preferably underground, wherein the pipeline when installed under tension is pulled or pushed, preferably by engaging at one end of the pipeline, into an underground bore, for example in concrete and/or soil, or into an already existing sewage system optionally requiring rehabilitation.

## Revendications

1. Tube, en particulier tube de canalisation, qui comprend au moins un moyen pour son raccordement, le tube (1) comprenant un élément de raccordement (8) et un tronçon tubulaire (2, 3) dont la paroi présente au moins localement une rainure (5, 7) qui est prévue pour tenir l'élément de raccordement (8) sur le tronçon tubulaire (2, 3),
dans lequel
au moins un perçage (10, 11) menant à travers la paroi de tube est ménagé dans le tronçon tubulaire (2, 3) et débouche dans la rainure (5, 7) et à travers lequel l'élément de raccordement (8) se laisse introduire dans la rainure (5, 7) et/ou enlever hors de la rainure (5, 7), et
l'élément de raccordement (8) est formé par un cordon préfabriqué, présentant une matière plastique,
le cordon se laisse comprimer dans la rainure (5, 7), dans une position de montage dans laquelle le tube (1) se laisse relier à un autre tube (1', 1", 1"'), et est prévu pour s'ouvrir de façon autonome depuis la position de montage jusque dans une position de retenue dans laquelle le cordon dépasse hors de la rainure (5, 7),
**caractérisé en ce que**
le cordon comprend en tant que noyau un élément élastique (13) qui déplace le cordon jusque dans la position de retenue, et une enveloppe (28) en matière plastique dans laquelle est noyé l'élément élastique (13).

2. Tube selon la revendication 1,
**caractérisé en ce que**
le moyen de raccordement est formé à au moins une extrémité du tube (1), de préférence aux deux extrémités du tube (1).

3. Tube selon la revendication 1 ou 2,
**caractérisé en ce que**
la rainure (5, 7) est une rainure intérieure (5) formée sur une face intérieure (4) du tronçon tubulaire (3) et/ou une rainure extérieure (7) formée sur une face extérieure (6) du tronçon tubulaire (2), et
a) le moyen de raccordement présente la rainure intérieure (5) à l'une des extrémités du tube (1), et la rainure extérieure (7) à l'autre extrémité du moyen de raccordement, les formes des tronçons tubulaires (2, 3) étant de préférence adaptées l'une à l'autre de telle sorte que les tronçons tubulaires (2, 3) sont enfichables l'un sur l'autre, ou
b) le moyen de raccordement présente aux deux extrémités du tube (1)
• la rainure intérieure (5) ou
• la rainure extérieure (7).

4. Tube selon l'une des revendications 1 à 3,
**caractérisé en ce que**
l'élément de raccordement (8) et la rainure (5, 7) présentent des formes adaptées l'une à l'autre de telle sorte que lors d'un agencement de l'élément de raccordement (8) dans la rainure (5, 7), un mouvement de l'élément de raccordement (8) dans le tube (1) est bloqué dans l'une au moins des directions axiales du tube (1), en particulier dans les deux directions axiales, et de préférence en direction radiale du tube (1).

5. Tube selon l'une des revendications 1 à 4,
**caractérisé en ce que**
le cordon se laisse ramollir, de préférence liquéfier, une fois agencé dans la rainure (5, 7).

6. Tube selon l'une des revendications 1 à 5,
**caractérisé en ce que**
dans ou sur le cordon préfabriqué, il est prévu un moyen (9) pour chauffer le cordon, qui comprend de préférence une résistance chauffante agencée dans ou sur le cordon.

7. Tube selon l'une des revendications 1 à 6,
**caractérisé en ce que**
la rainure (5, 7) est pourvue d'une contre-dépouille (13, 14) dans laquelle vient s'engager l'élément de raccordement (8), l'élément de raccordement (8) comprenant de préférence au moins une portion (16) prévue pour faire saillie dans la contre-dépouille (13, 14).

8. Tube selon la revendication 7,
**caractérisé en ce que**
l'élément de raccordement (8), une rainure extérieure (7) et une rainure intérieure (5) présentent des formes adaptées les unes aux autres de telle sorte que lors d'un agencement simultané de l'élément de raccordement (8) dans la rainure extérieure (7) et dans la rainure intérieure (5), un mouvement de l'élément de raccordement (8) dans le tube (1) dans l'une au moins des directions axiales du tube (1) est bloqué, et lors d'un agencement dans la rainure extérieure (7) et dans la rainure intérieure (5), l'élément de raccordement (8) est de préférence accroché dans la rainure extérieure (7) et dans la rainure intérieure (5), en direction axiale du tube (1).

9. Tube selon l'une des revendications 1 à 8,
**caractérisé en ce que**
le tube (1) présente une section transversale de forme ronde, elliptique ou ovale.

10. Procédé de raccordement d'un tube (1), en particulier d'un tube de canalisation, qui comprend au moins un moyen pour son raccordement, le tube (1) comprenant un élément de raccordement (8) et un tronçon tubulaire (2, 3) dont la paroi présente au moins localement une rainure (5, 7) qui est prévue pour retenir l'élément de raccordement (8) sur le tronçon tubulaire (2, 3),
dans lequel
au moins un perçage (10, 11) menant à travers la paroi de tube est ménagé dans le tronçon tubulaire (2, 3) et débouche dans la rainure (5, 7) et à travers lequel l'élément de raccordement (8) est introduit dans la rainure (5, 7) et/ou enlevé hors de la rainure (5, 7), et
l'élément de raccordement (8) est formé par un cordon préfabriqué, présentant de la matière plastique,
le cordon est comprimé dans la rainure (5, 7), dans une position de montage dans laquelle le tube (1) est relié à un autre tube (1', 1", 1"'), et s'ouvre de façon autonome depuis la position de montage jusque dans une position de retenue dans laquelle le cordon dépasse hors de la rainure (5, 7),
**caractérisé en ce que**
le cordon comprend en tant que noyau un élément élastique (13) qui déplace le cordon jusque dans la position de retenue, et une enveloppe (28) en matière plastique dans laquelle est noyé l'élément élastique (13).

11. Procédé selon la revendication 10,
**caractérisé en ce que**
deux ou plusieurs des tubes (1) sont reliés entre eux de préférence pour former une conduite de canalisation, les tubes (1) étant de préférence enfichés les uns avec les autres à leurs extrémités.

12. Procédé selon la revendication 10 ou 11,
**caractérisé en ce que**
le cordon est introduit dans la rainure (5, 7), pour relier les tubes (1).

13. Procédé selon la revendication 12,
**caractérisé en ce que**
le cordon préfabriqué est ramolli, de préférence liquéfié, une fois agencé dans la rainure (5, 7).

14. Procédé selon l'une des revendications 11 à 13,
**caractérisé en ce que**
la conduite tubulaire est posée sous traction ou sous pression, de préférence de façon souterraine, et lors de la pose sous traction, la conduite tubulaire est tirée ou poussée dans un forage souterrain, par exemple dans du béton et/ou dans la terre, ou bien dans une canalisation déjà existante le cas échéant nécessitant un renouvellement, de préférence avec attaque à une extrémité de la conduite tubulaire.
